# EUROPÄISCHE PATENTSCHRIFT

(11) **EP 0 796 764 B1**
(45) Veröffentlichungstag und Bekanntmachung des Hinweises auf die Patenterteilung: **24.10.2001**
(21) Anmeldenummer: 97103991.2
(22) Anmeldetag: 10.03.1997
(51) Int. Cl.: B60R 13/04

(54) **Abdeckleiste für eine in ein Fahrzeugdach eingelassene Rinne**
Covering strip for a vehicle roof rack channel
Baguette de recouvrement d'une gouttière de toit de véhicule

(30) Priorität: 22.03.1996 DE 19611340
(43) Veröffentlichungstag der Anmeldung: 24.09.1997
(73) Patentinhaber: Schade GmbH & Co. KG, 58840 Plettenberg (DE)
(72) Erfinder: Dancasius, Michael, 42105 Wuppertal (DE); Vornbäumen, Jens, 58762 Altena (DE)
(74) Vertreter: Gossel, Hans K., Dipl.-Ing.

(56) Entgegenhaltungen:
- EP-A- 0 386 986
- DE-U- 9 406 335
- DE-U- 9 419 781
- FR-A- 2 680 737

## Beschreibung

Die Erfindung betrifft eine Abdeckleiste für eine in ein Fahrzeugdach eingelassene Rinne nach dem Oberbegriff des Patent Anspruchs 1.

Bei Kraftfahrzeugen ist es üblich, in das Fahrzeugdach zwei in Längsrichtung sowie in Abständen zu den Dach-Seitenrändern verlaufende Rinnen oder Dachkanäle einzuformen, die mittels der der vorliegenden Erfindung zugrundeliegenden Abdeck- bzw. Zierleisten abgedeckt werden, damit eine möglichst glattflächige Außenfläche zur äußeren Dachhaut entsteht. Zur einfachen Montage wird die Abdeckleiste beispielsweise durch Rastelemente oder Clipse festgelegt. Diese Art der Festlegung ist zeitaufwendig und umständlich. Auch bereitet eine solche Verrastung zusätzliche Probleme, da die Breiten der Rinnen innerhalb relativ großer Toleranzen liegen und diese Toleranzen durch die im allgemeinen sehr formstabilen bekannten Abdeckleisten nicht ausgeglichen werden können. Eine sichere Festlegung der Abdeckleiste in der Rinne kann deshalb nur dann erfolgen, wenn die Befestigungselemente entsprechend gestaltet sind.

Aus DE-U-94 06 335 ist eine Abdeckleiste der eingangs angegebenen Art bekannt, die mit einem Halteelement mit aufeinanderzu vorgespannten Schenkeln versehen ist, die auf ihren einander zugewandten Seiten Rasten aufweisen, so daß sie auf einen Tragkörper unter Vorspannung festgeklemmt werden können.

Der Erfindung liegt deshalb die Aufgabe zugrunde, eine Abdeckleiste mit den Merkmalen des Oberbegriffes des Anspruches 1 so zu gestalten, daß sich diese untere Ausgleich eines großen Toleranzfeldes selbsttätig an die jeweilige Breite der Rinne anpaßt, ohne daß dazu speziell gestaltete Befestigungselemente oder dergleichen notwendig werden.

Diese Aufgabe wird durch die kennzeichenden der Merkmale des Anspruchs 1 gelöst. Bei der erfindungsgemäßen Abdeckleiste erfolgt deren Festlegung in der Rinne im wesentlichen durch das Querfederelement, welches auf die maximale Breite der Rinne ausgelegt ist, und dessen Breite sich beim Einsetzen in die Rinne verringert, so daß es unter Vorspannung steht. Diese Vorspannungskräfte bewirken, daß die seitlich angesetzten, eine ausreichende Reibkraft gewährleistenden Stege unabhängig von der jeweiligen Breite der Rinne mit im wesentlichen gleicher Kraft an die Längsseitenwände der Rinne angedrückt werden. Dadurch bleiben die erzeugten Reibkräfte stets gleich.

Das Einsetzen der Abdeckleiste ist sehr einfach, da sie lediglich von oben mit einer bestimmten Kraftaufwand in die Rinne eingedrückt werden muß. Durch die im wesentlichen kraftschlüssige Festlegung ist die jeweilige Breite der Rinne unbedeutend, selbst dann noch, wenn zur Erhöhung der Sicherheit die Längsseitenwände der Rinne profiliert, beispielsweise mit in Längsrichtung verlaufenden Rillen versehen sein sollten.

Die Federwirkung des Querfederelementes wird begünstigt bzw. der Federweg ist besonders groß, wenn es aus einem auf der Länge der Rinne durchlaufenden Federstahlstreifen durch wenigstens einmaliges Biegen längs eines in Längsrichtung des Federstahlstreifens verlaufenden Biegebereiches gebildet ist. Durch die Verwendung eines geeigneten Federstahles sind die Rückstellkräfte besonders hoch und eine Bruchgefahr ist ausgeschlossen. Diese Vorteile werden noch weiter dadurch begünstigt, wenn das Querfederelement durch mehrmaliges Biegen längs vorbestimmter Biegebereiche des Federstahlstreifens gebildet ist, wobei der jeweils gebogene Bereich im wesentliche abgerundet verläuft. Außerdem läßt sich durch mehrmaliges Biegen der Federweg wirksam erhöhen. Durch den in einem Bogen verlaufenden Biegebereich wird außerdem das Material geschont, so daß Materialbrüche ausgeschlossen sind. Das mehrmalige Biegen erfolgt beispielsweise in wechselnden Richtungen, so daß der Querschnitt mäanderförmig ausfällt. Das mehrmalige Biegen kann aber auch so erfolgen, daß das Querfederelement einen eckigen, beispielsweise einen viereckigen, nicht geschlossenen Querschnitt hat.

Selbstverständlich ist es auch möglich, wenn auch nicht in der Zeichnung dargestellt, die Leiste durch ein oder mehrere gesondert aufgesetzte Federelemente in der Rinne zu verklemmen.

Um die Rinnen über die gesamte Breite abzudecken, ist in weiterer bevorzugter Ausgestaltung der Erfindung vorgesehen, daß das Querfederelement einen sich im wesentlichen über dessen Breite erstreckenden, in der Ebene des Fahrzeugdaches oder darunter liegenden Abdecksteg aufweist. Im letzteren Fall ist es zweckmäßig, wenn das Querfederelement an der oberen, der Ebene des Fahrzeugdaches zugeordneten Seite einen sich vorzugsweise über die gesamte Breite erstrekkenden Sichtstreifen aufweist, so daß dadurch eine streifenförmige Abdeckung geschaffen wird. Dazu ist es dann vorteilhaft, wenn die äußeren Ränder des Sichtstreifens die Rinne seitlich übergreifen. Dieser Sichtstreifen sollte aus dem gleichen Material wie die Reibstege gefertigt sein, beispielsweise aus Gummi oder Kunststoff. Weitere Merkmale und Vorteile ergeben sich aus den Ansprüchen 8 bis 13.

Anhand der beiliegenden Zeichnungen wird die Erfindung nachstehend näher erläutert.

Es zeigen:
- **Fig. 1:**: ein Kraftfahrzeug mit zwei in das Fahrzeugdach eingelassenen Rinnen in perspektivischer und schematischer Darstellung und
- **Fig. 2:**: eine bevorzugte Querschnittsform einer in die Rinne eingesetzten Abdeckleiste in vergrößerter Darstellung.

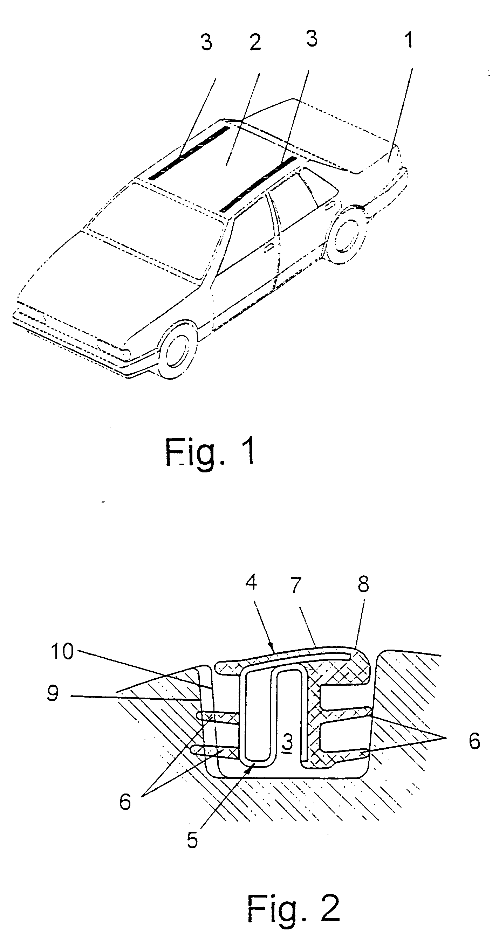

Der in der Fig. 1 schematisch angedeutete Kraftwagen 1 ist mit zwei in das Fahrzeugdach 2 eingelassenen Rinnen 3 ausgerüstet, die parallel und im Abstand zueinander nahe den Dach-Außenseiten verlaufen. In jede Rinne 3 ist kraftschlüssig eine Abdeckleiste 4 eingesetzt. Die Abdeckleiste 4 besteht aus einem Querfederelement 5, das verschiedene Querschnitte haben kann. Ein bevorzugter erfindungsgemäßer Querschnitt ist aus einem streifenförmigen Zuschnitt aus Federstahl gefertigt und weist an beiden Längsseiten angesetzte Reibstege 6 aus einem elastischen Material, zum Beispiel Gummi oder Kunststoff, auf. Das Querfederelement ist an seiner oberen Seite mit einem Abdecksteg 7 versehen, der so zum Fahrzeugdach 2 steht, daß bei Bedarf ein darauf von oben aufgesetzter Sichtstreifen 8 fluchtend oder annähernd fluchtend mit der Außenseite des Fahrzeugdaches abschließt. Die seitlichen Reibstege 6 sind linienförmig mit äußeren Spitzen ausgebildet, die die Längsseitenwände 9, 10 der Rinne 3 kontaktieren. Die Sichtstreifen 8 sind zweckmäßig jeweils so breit, daß sie die Längsseitenwände 9, 10 übergreifen.

Das Querfederelement 5 ist durch Biegen von in Längsrichtung verlaufenden Biegebereichen eines Federstahlstreifens hergestellt, wobei die Biegebereiche zweckmäßig bogenförmig gekrümmt sind, aber auch einen eckigen Querschnitt haben können. Aus der Fig. 2 ergibt sich, daß beim Einsetzen der Abdeckleiste 4 in die Rinne 3 des Querfederelementes 5 je nach der Breite der Rinne mehr oder weniger quer zu deren Längsrichtung zusammengedrückt wird. Durch die Rückstellkräfte werden die Reibstege 6 je nach Härte des Materials deformiert, so daß die Abdeckleiste 4 durch die Reibkräfte in der Rinne zuverlässig festgelegt ist. Die Anlage erfolgt zwar unmittelbar durch die Reibstege 6; diese werden jedoch durch die Rückstellkräfte des Querfederelementes 5 beaufschlagt. Dadurch stellt sich ein Kräftegleichgewicht ein. Die Stege 6 können an die Leiste anextrudiert, angeklebt oder sonstwie befestigt werden und besteher. zweckmäßig aus Gummi oder Kunststoff.

Das Querfederelement 5 der Abdeckleiste 4 ist mit drei im Abstand zueinander angeordneten Federstegen versehen, die in etwa parallel zu den Längsseitenwänden 9 und 10 der Rinne 3 stehen und vom Abdecksteg 7 abgedeckt sind. Das Querfederelement 5 kann auch verschiedene andere Biegeformen haben, z. B. U-oder W- oder V-förmig ausgestaltet sein. Bei jeder gewählten Querschnittsform sollte jedoch sichergestellt sein, daß die Reibstege 6 funktionsgerecht an die Längsseiten des Federelementes angesetzt werden können.

## Patentansprüche

1. Abdeckleiste für eine in ein Fahrzeugdach eingelassene Rinne, die darin kraft- und/oder formschlüssig festlegbar ist,
mit einem an die jeweilige Breite der Rinne (3) sich selbsttätig anpassenden, vorspannbaren Querfederelement,
an dessen Längsseiten ein- oder doppelseitig Stege (6) aus einem die Reibung zwischen den Auflageflächen der Abdeckleiste (4) in der Rinne (3) erhöhenden elastischen Material angesetzt sind, deren äußere freie Kanten oder Seiten an den Längsseitenwänden (9, 10) der Rinne (3) anliegen,
**dadurch gekennzeichnet,**
**daß** das Querfederelement (5) aus Federstahl besteht und
**daß** die in der Rinne federnd zusammengedrückten Längsseiten des Querfederelements (5) im wesentlichen parallel zu den Seitenwänden der Rinne (3) ausgebildet sind.

2. Abdeckleiste nach Anspruch 1, **dadurch gekennzeichnet, daß** das Querfederelement (5) aus einem Federstahlstreifen durch wenigstens einmaliges Biegen längs eines in Längsrichtung des Federstahlstreifens verlaufenden Biegebereiches gebildet ist.

3. Abdeckleiste nach Anspruch 1 oder 2, **dadurch gekennzeichnet, daß** das Querfederelement (5) durch mehrmaliges Biegen längs vorbestimmter Biegebereiche des Federstahlstreifens gebildet ist, wobei der jeweils gebogene Bereich im wesentlichen abgerundet verläuft.

4. Abdeckleiste nach einem oder mehreren der Ansprüche 1 bis 3, **dadurch gekennzeichnet, daß** das Querfederelement (5) durch mehrmaliges Biegen längs vorbestimmter Biegebereiche des Federstahlstreifens gebildet ist, derart, daß es einen eckigen, nicht geschlossenen Querschnitt aufweist.

5. Abdeckleiste nach Anspruch 1, **dadurch gekennzeichnet, daß** das Querfederelement (5) einen sich vorzugsweise im wesentlichen über dessen Breite erstreckenden, in der Ebene des Fahrzeugsdaches (2) oder direkt darunter liegenden Abdecksteg (7) aufweist.

6. Abdeckleiste nach Anspruch 1 oder 5, **dadurch gekennzeichnet, daß** das Querfederelement (5) an der oberen, der Ebene des Fahrzeugdaches (2) zugeordneten Seite einen sich zumindest über die gesamte Breite erstreckenden Sichtstreifen (8) aufweist.

7. Abdeckleiste nach Anspruch 1 und 6, **dadurch gekennzeichnet, daß** die Dichtlippen (6) und der Sichtstreifen (8) aus gleichen Materialien, beispielsweise aus Gummi oder Kunststoff gefertigt sind.

8. Abdeckleiste nach einem der Ansprüche 1 bis 7, **dadurch gekennzeichnet, daß** das Querfederelement als eine auf der Länge der Rinne durchlaufende einstückige Leiste ausgebildet ist.

9. Abdeckleiste nach Anspruch 8, **dadurch gekennzeichnet, daß** die Leiste durch ein auf deren Länge im wesentlichen durchlaufendes gesondertes Federelement in der Rinne verklemmt ist.

10. Abdeckleiste nach Anspruch 8, **dadurch gekennzeichnet, daß** die Leiste mittels auf der Länge im Abstand- voneinander angeordneter einzelner Federelemente in der Rinne verklemmt ist.

11. Abdeckleiste nach einem der Ansprüche 1 bis 10, **dadurch gekennzeichnet, daß** die Stege (6) an die Leiste anextrudiert, angeklebt oder sonstwie aufgesetzt oder befestigt sind.

12. Abdeckleiste nach einem der Ansprüche 1 bis 11, **dadurch gekennzeichnet, daß** die Stege (6) aus Gummi, Kunststoff oder dergleichen bestehen.

13. Abdeckleiste nach einem der Ansprüche 1 bis 12, **dadurch gekennzeichnet, daß** die Stege (6) und die Leiste (5) einstückig ausgebildet sind.

## Claims

1. Covering strip for a groove recessed in a vehicle roof, which covering strip can be secured in said groove in a frictional and/or positive-locking manner,
having a prestressable transverse spring element which automatically adapts itself to the particular width of the groove (3) and to whose longitudinal sides are fitted, on one or two sides, webs (6) which are made of an elastic material increasing the friction between the supporting surfaces of the covering strip (4) in the groove (3) and whose outer free edges or sides bear against the longitudinal side walls (9, 10) of the groove (3),
**characterized in that** the transverse spring element (5) consists of spring steel, and **in that** the longitudinal sides of the transverse spring element (5), which sides are compressed resiliently in the groove, are formed essentially parallel to the side walls of the groove (3).

2. Covering strip according to Claim 1, **characterized in that** the transverse spring element (5) is formed from a strip of spring steel by bending at least once along a bending region running in the longitudinal direction of the strip of spring steel.

3. Covering strip according to Claim 1 or 2, **characterized in that** the transverse spring element (5) is formed by repeatedly bending along predetermined bending regions of the strip of spring steel, the region which is bent in each case having an essentially rounded profile.

4. Covering strip according to one or more of Claims 1 to 3, **characterized in that** the transverse spring element (5) is formed by repeatedly bending along predetermined bending regions of the strip of spring steel in such a manner that it has an angular, non-closed cross section.

5. Covering strip according to Claim 1, **characterized in that** the transverse spring element (5) has a covering web (7) which preferably extends essentially over its width and lies in the plane of the vehicle roof (2) or directly below it.

6. Covering strip according to Claim 1 or 5, **characterized in that** the transverse spring element (5) has, on the upper side assigned to the plane of the vehicle roof (2), a visible strip (8) which extends at least over the entire width.

7. Covering strip according to Claims 1 and 6, **characterized in that** the sealing lips (6) and the visible strip (8) are manufactured from the same materials, for example from rubber or plastic.

8. Covering strip according to one of Claims 1 to 7, **characterized in that** the transverse spring element is designed as a single-piece strip which is continuous over the length of the groove.

9. Covering strip according to Claim 8, **characterized in that** the strip is clamped in the groove by means of a separate spring element which is essentially continuous over the length of said strip.

10. Covering strip according to Claim 8, **characterized in that** the strip is clamped in the groove by means of individual spring elements which are arranged at a distance from one another over the length.

11. Covering strip according to one of Claims 1 to 10, **characterized in that** the webs (6) are extruded, bonded or placed or fastened in some other manner onto the strip.

12. Covering strip according to one of Claims 1 to 11, **characterized in that** the webs (6) consist of rubber, plastic or the like.

13. Covering strip according to one of Claims 1 to 12, **characterized in that** the webs (6) and the strip (5) are of integral design.

## Revendications

1. Baguette de recouvrement pour une gouttière ménagée dans un toit de véhicule, qui peut être fixée dans celle-ci par force et/ou par concordance des formes, avec un élément élastique transversal apte à être précontraint, s'adaptant automatiquement à la largeur respective de la gouttière (3), aux côtés longitudinaux duquel sont appliqués des barrettes (6) à une ou deux faces en un matériau élastique renforçant le frottement entre les faces d'application de la baguette de recouvrement (4) dans la gouttière (3) , dont les arêtes ou côtés extérieurs libres s'appliquent aux parois latérales longitudinales (9, 10) de la gouttière (3), **caractérisée en ce que** l'élément élastique transversal (5) est en acier à ressorts et **en ce que** les côtés longitudinaux de l'élément élastique transversal (5) comprimés élastiquement dans la gouttière sont réalisés sensiblement parallèlement aux parois latérales de la gouttière (3).

2. Baguette de recouvrement selon la revendication 1, **caractérisée en ce que** l'élément élastique transversal (5) est formé à partir d'une bande d'acier à ressorts par au moins un pliage le long d'une zone de pliage s'étendant dans la direction longitudinale de la bande d'acier à ressorts.

3. Baguette de recouvrement selon la revendication 1 ou 2, **caractérisée en ce que** l'élément élastique transversal (5) est formé par un pliage répété le long de zones de pliage prédéfinies de la bande d'acier à ressorts, où la zone respectivement pliée s'étend d'une manière sensiblement arrondie.

4. Baguette de recouvrement selon l'une ou plusieurs des revendications 1 à 3, **caractérisée en ce que** l'élément élastique transversal (5) est formé par un pliage répété le long de zones de pliage prédéterminées de la bande d'acier à ressorts de telle sorte qu'il présente une section transversale angulaire, non fermée.

5. Baguette de recouvrement selon la revendication 1, **caractérisée en ce que** l'élément élastique transversal (5) présente une barrette de recouvrement (7) s'étendant de préférence sensiblement sur sa largeur, située dans le plan du toit de véhicule (2) ou directement en dessous.

6. Baguette de recouvrement selon la revendication 1 ou 5, **caractérisée en ce que** l'élément élastique transversal (5) présente au côté supérieur orienté vers le plan du toit de véhicule (2) une bande visible (8) s'étendant au moins sur toute la largeur.

7. Baguette de recouvrement selon les revendications 1 et 6, **caractérisée en ce que** les lèvres d'étanchéité (6) et la bande visible (8) sont réalisées dans les mêmes matériaux, par exemple en caoutchouc ou en matière synthétique.

8. Baguette de recouvrement selon l'une des revendications 1 à 7, **caractérisée en ce que** l'élément élastique transversal est réalisé sous forme de baguette en une pièce s'étendant sur la longueur de la gouttière.

9. Baguette de recouvrement selon la revendication 8, **caractérisée en ce que** la baguette est coincée dans la gouttière par un élément élastique séparé, sensiblement continu sur sa longueur.

10. Baguette de recouvrement selon la revendication 8, **caractérisée en ce que** la baguette est coincée dans la gouttière par des éléments élastiques individuels disposés sur la longueur à une distance les uns des autres.

11. Baguette de recouvrement selon l'une des revendications 1 à 10, **caractérisée en ce que** les barrettes (6) sont rapportées par extrusion à la baguette, sont collées ou sont appliquées ou fixées d'une autre manière.

12. Baguette de recouvrement selon l'une des revendications 1 à 11, **caractérisée en ce que** les barrettes (6) sont en caoutchouc, matière synthétique ou analogue.

13. Baguette de recouvrement selon l'une des revendications 1 à 12, **caractérisée en ce que** les barrettes (6) et la baguette (5) sont réalisées en une pièce.
